# FASCICULE DE BREVET EUROPEEN

(11) **EP 3 938 635 B1**
(45) Date de publication et mention de la délivrance du brevet: **25.01.2023**
(21) Numéro de dépôt: 20721675.5
(22) Date de dépôt: 11.03.2020
(51) Int. Cl.: F02C 3/107, F02C 7/36, F01D 5/02, F01D 5/06, F01D 21/04

(54) **COUPLAGE CURVIQUE POUR TURBOMACHINE D'AÉRONEF**
GESCHWEIFTE KUPPLUNG FÜR EINE FLUGZEUGTURBOMASCHINE
CURVIC COUPLING FOR AN AIRCRAFT TURBOMACHINE

(30) Priorité: 12.03.2019 FR 1902529
(43) Date de publication de la demande: 19.01.2022
(73) Titulaire: Safran Helicopter Engines, 64510 Bordes (FR)
(72) Inventeur: DESCUBES, Olivier, Pierre, 77550 MOISSY-CRAMAYEL (FR); BATLLE, Frédéric, Ferdinand, Jacques, 77550 MOISSY-CRAMAYEL (FR)
(74) Mandataire: Ernest Gutmann - Yves Plasseraud S.A.S.
(86) Numéro de dépôt international: PCT/FR2020/000053
(87) Numéro de publication internationale: WO 2020/183075

(56) Documents cités:
- EP-A1- 3 170 971
- US-A1- 2003 017 878
- US-A1- 2017 254 295

## Description

### Domaine technique de l'invention

La présente invention concerne de manière générale les mécanismes de couplage pour turbomachine à gaz d'aéronef et plus particulièrement les couplages utilisés dans l'assemblage de composants comprenant des éléments rotatifs (ou éléments de rotor), tels que des impulseurs, des roues de turbines, et des couplages sur des zones de telles turbomachines à composants fortement sollicités.

Sont ainsi spécifiquement concernés les mécanismes de couplage dentés pour assembler des éléments rotatifs d'une turbomachine à gaz pour aéronef.

Dans ce contexte, US2003017878 divulgue un type de mécanisme comprenant : une paire de moitiés de couplage ayant une interface de palier entre elles ; chacune desdites moitiés de couplage présentant ainsi une pluralité de dents cannelées concentriques inter-engagées autour d'un axe, pour transmettre un couple entre elles, comme dans un accouplement curvique.

EP3170971 concerne également ce domaine en ce qu'il se rapporte à un système d'accouplement comprenant des joints configurés pour se verrouiller par friction sous une pression de compression via des dents coniques pour joindre des composants rotatifs, lesquels peuvent être des composants d'une turbine à gaz.

Compte tenu de ce qui présenté dans la présente demande, l'expression « interface de palier » a pour sens couplage denté axial.

Dans une turbomachine à gaz pour aéronef, les accouplements curviques (curvic couplings, en anglais) de ce type sont destinés à l'assemblage de composants d'éléments rotatifs et ont été développés pour répondre aux besoins en mécanismes d'attelage permanents nécessitant une précision extrême, une capacité de charge maximale et des cadences de production relativement économiques.

Un accouplement curvique fournit un assemblage précis, compact et autonome dans lequel les dents cannelées servent de dispositifs de centrage et d'entraînement. Le type de couplage curvique le plus largement utilisé dans les moteurs à turbine à gaz est le couplage curvique fixe. Le couplage curvique fixe peut être décrit comme une cannelure de face de précision avec des dents possédant un degré élevé de précision de l'espacement des dents, une finition de surface fine et un positionnement axial de précision.

Un arbre épaulé sert alors simplement de tirant et n'interfère pas avec la fonction de centrage des dents curviques.

La conception de l'accouplement curvique en lui-même est fonction de plusieurs variables dont certaines incluent la quantité de couple requise devant être transmise par l'accouplement, la charge de cisaillement et les limites de charge des matériaux utilisés dans les accouplements, ainsi que l'importance de la tension de tirant requise pour maintenir un engagement axial étroit entre les composants inter-assemblés, dans toutes les conditions de fonctionnement.

En cas de rupture du tirant, les efforts internes risquent fortement de conduire à un désengagement des dents cannelées.

Sur une turbomachine comme précitée, les éléments rotatifs du mécanisme de couplage équipé de telles dents, typiquement via donc des accouplements curviques, peuvent consister en (des rotors d')une turbine haute pression (THP) et (d')un compresseur ainsi inter-assemblés.

Or, si survient un désengagement entre lesdites dents cannelées des moitiés de couplage (la cause peut en être une rupture du tirant), la turbine haute pression n'est plus soumise au couple résistant du compresseur. Dès lors que la THP continue à être alimentée par le flux aérodynamique entrant dans la turbomachine, ceci peut conduire à une situation potentielle de survitesse difficilement quantifiable, avec de très graves conséquences potentielles. Certes, il semble qu'une rupture de tirant alors que la turbomachine est en fonctionnement conduise a priori à un blocage des éléments rotatifs précités. Cependant la séquence entre la rupture du tirant et le blocage n'est pas maîtrisée ce qui peut se produire dans la turbomachine avant ce blocage demeure donc un danger potentiel.

La proposition élaborée dans l'invention vise à la mise en place d'un mécanisme de couplage permettant d'assurer que lesdites dents cannelées des moitiés de couplage ne se désengagent pas totalement, en particulier en cas d'une dite rupture de tirant.

Plus précisément, il est ainsi proposé que le mécanisme de couplage denté précité, avec donc sa paire de moitiés de couplage ayant chacune une pluralité de dents cannelées, soit tel qu'il comprenne en outre une excroissance :
- présente, à l'écart dudit axe, sur l'une desdites dents cannelées de l'une desdites moitiés de couplage, et
- avec laquelle une dite dent cannelée de l'autre moitié de couplage viendra en contact dans une situation de désaccouplement des moitiés de couplage.

L'expression « une excroissance » est à comprendre comme au moins une excroissance. Toutefois, avec une seule excroissance (ou une seule dent de l'une et/ou l'autre des deux moitiés de couplage ainsi pourvue(s)) on va éviter l'hyperstatisme et sécuriser le basculement ou pivotement relatif attendu, autour de l'excroissance, entre lesdites moitiés de couplage. Le dispositif de sécurité à excroissance étant directement associé à la liaison, il sera activé de manière systématique, en cas de déclenchement de désengagement entre les dents cannelées.

En outre, en cas d'une telle initiation de désaccouplement par écartement le long dudit axe, l'excroissance sur l'extrémité distale créera une zone de basculement d'une des moitiés de couplage, donc d'un des éléments rotatifs, par rapport à l'autre, avec ainsi un désaxement de cet élément. Ceci doit favoriser un frottement contre des parties de stator de la turbomachine, induisant un échauffement sous l'effet du contact, ce qui va conduire au freinage du rotor. Dès lors que les conditions de désaccouplement (moment, état de l'environnement, vitesse, des éléments rotatifs... etc...) sont imprévisibles, il pourra être préféré que ladite excroissance soit présente sur l'extrémité libre non pas d'une dite dent cannelée prédéfinie, mais de l'une quelconque de ces dents cannelées.

Si ceci est respecté, on trouvera statistiquement, sur un lot de plusieurs mécanismes de couplage dentés d'éléments rotatifs de turbomachines, des excroissances présentes à des emplacements angulaires différents suivant les éléments rotatifs et/ou les turbomachines. Avec un positionnement d'excroissance sans emplacement angulaire préférentiel, on pourra en outre assurer librement l'opération de tierçage (positionnement angulaire adéquat entre des parties de stator, tels que deux disque), durant l'équilibrage de ce rotor.

Par ailleurs, pour éviter des frottements inappropriés à l'endroit du couplage, alors que la turbomachine fonctionne normalement, tout en favorisant un appui angulaire une fois le désaccouplement initié, il est conseillé que ladite excroissance fasse saillie sur l'extrémité libre de la dent cannelée considérée, à l'endroit d'un épaulement qui l'entoure.

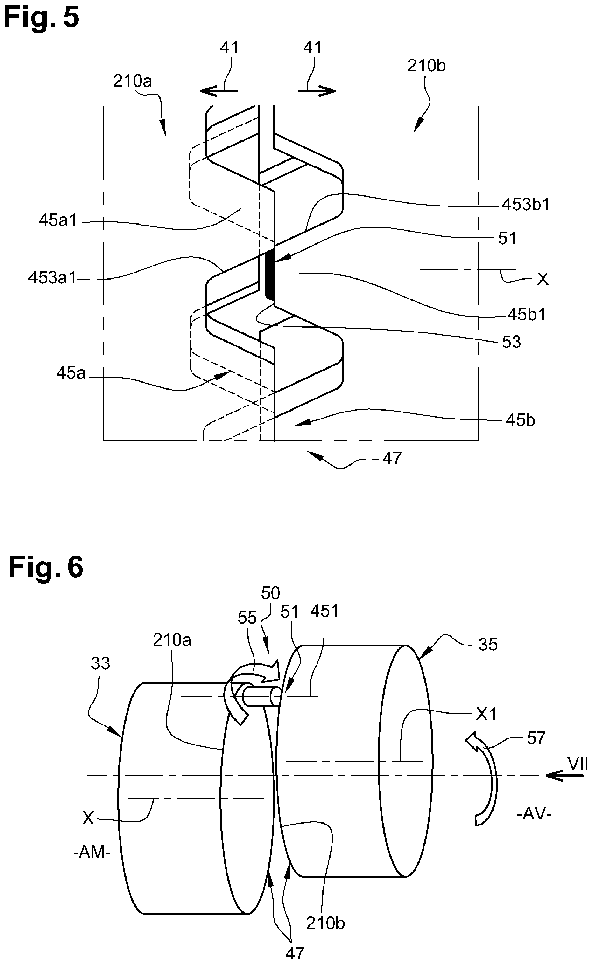

Une partie distale, libre d'une dent dudit élément rotatif non pourvue d'excroissance viendra alors, à un moment du désaccouplement, s'appuyer sur l'épaulement, à la jonction entre l'excroissance et la dent où cette excroissance est présente (voir figure 5 annexée).

Et, si l'excroissance présente un périmètre entièrement entouré par un tel épaulement, on pourra éviter en toute situation normale d'accouplement, tout frottement dans l'arrondi des fonds de dents où se placera naturellement l'excroissance, hors situation critique.

En liaison avec ce qui précède, est aussi ici concerné un procédé pour maîtriser les conséquences du désaccouplement entre les moitiés de couplage précitées. US2017254295 s'y réfère, qui divulgue un procédé pour maîtriser les conséquences d'un désaccouplement sur un mécanisme de couplage denté axial d'un assemblage d'éléments rotatifs de turbomachine à gaz pour aéronef, ledit mécanisme comprenant une paire de moitiés de couplage ayant une interface de couplage denté axial entre elles, chacune desdites moitiés de couplage présentant ainsi une pluralité de dents cannelées inter-engagées autour d'un axe, pour transmettre un couple entre elles.

Mais une spécificité de la solution ici présentée est, en situation de début de désaccouplement axial, de provoquer via ladite excroissance un pivotement relatif entre les moitiés de couplage, ceci autour de l'excroissance, laquelle aura donc été positionnée sur l'une des dents cannelées, à l'écart de l'axe (X) nominal de rotation.

L'invention sera si nécessaire encore mieux comprise et d'autres détails, caractéristiques et avantages de l'invention pourront apparaît à la lecture de la description suivante faite à titre d'exemple non limitatif en référence aux dessins annexés.

### Brève description des figures

[Fig. 1] représente une vue de côté des éléments rotatifs d'une turbomachine à gaz typique montrant des couplages curviques ;
[Fig. 2] représente une vue en coupe montrant la fixation des roues de la turbomachine de la figure 1 au moyen d'accouplements curviques ;
[Fig. 3] représente un montage alternatif à celui des figures 1 et 2, toujours à arbre tirant et accouplements curviques ;
[Fig. 4] et
[Fig. 5] représentent des agrandissements de la zone III (trait renforcé ajouté) de curvique de la figure 3, en états respectivement accouplé (comme figure 3) et désaccouplé ;
[Fig. 6] représente l'effet de basculement provoqué par l'excroissance précitée sur les deux mobiles en cause (ici 33 et 35) ;
[Fig. 7] représente une vue d'aval (AV) vers l'amont (AM), cf. flèche VII figure 6, des deux mêmes mobiles suite à un désaccouplement de curviques et alors que l'excroissance (51) est en prise avec une zone coopérante d'une des dents de l'autre moitié de couplage, et
[Fig. 8] représente une partie de la figure 3, pour localiser (dans le cadre marqué en trait renforcé) la zone de frottement du rotor de turbine ici à ralentir, en cas donc de désaccouplement de curviques.

### Description détaillée de l'invention

Sur les dessins annexés, les mêmes références numériques désignent des parties identiques dans toutes les vues.

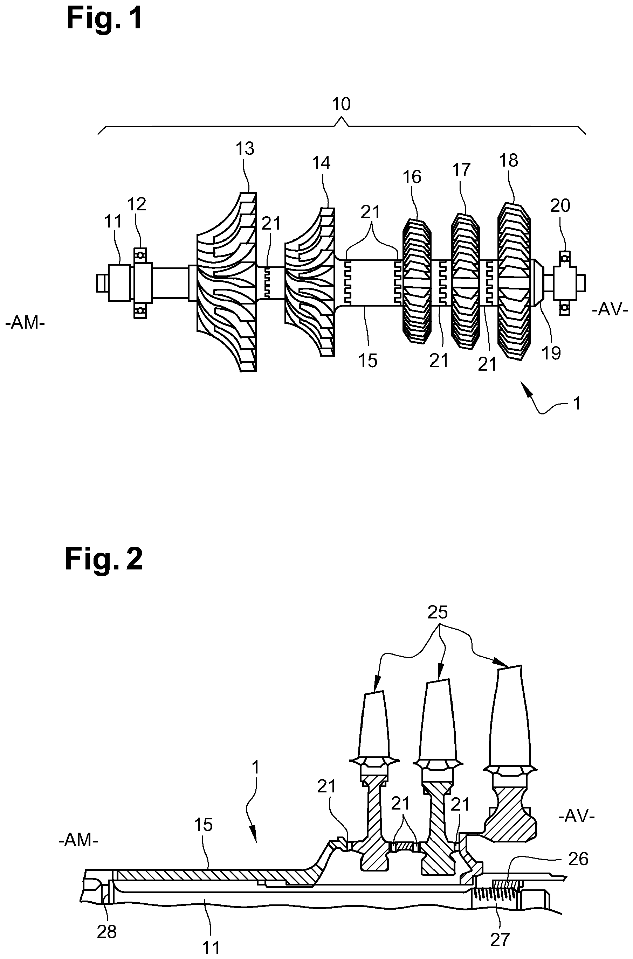

En particulier à la Figure 1, la vue latérale schématique représente des éléments rotatifs 10 d'un moteur à turbine, ou turbomachine, à gaz 1, pour aéronef. Les éléments rotatifs 10 sont montés sur un arbre épaulé 11 ayant des paliers 12 et 20 à chaque extrémité. L'arbre épaulé 11 s'étend suivant l'axe conventionnel X de la turbomachine 1 autour duquel sont montés tournants les rotors respectivement de la partie compresseur et de la partie turbine de la turbomachine.

Ce groupe rotatif, qui peut comprendre, le long de l'axe X et d'amont (AM) vers l'aval (AV), de premier et deuxième étages de roues de compresseur (impeller) 13 et 14, un coupleur 15, des roues de premier deuxième et troisième étages de turbine 16, 17, 18 et un capuchon d'extrémité 19, peut être monté sur l'arbre épaulé 11 au moyen de d'accouplements curviques 21 et de tirants et écrous de serrage (représentés sur la figure 2).

Avec le détail en coupe de la figure 2, on montre comment des roues de turbine de la turbomachine 1 peuvent être montées uniquement sur un accouplement curvique 21. L'accouplement curvique peut être de type fixe.

L'arbre épaulé 11, dont le diamètre est inférieur à celui des passages centraux axiaux des roues tubulaires de turbine 25 et du coupleur 15, est passé à travers lesdits passages centraux.

Lorsque les roues de turbine 25 et le coupleur 15 sont agencés aux emplacements appropriés, un écrou de tirant 26 situé sur l'extrémité de l'arbre épaulé 11 peut être ajusté sur le segment fileté 27 afin de maintenir la compression axiale appropriée des roues de turbine 25 et du coupleur 15 contre l'épaulement 28.

L'arbre épaulé 11 peut servir simplement de tirant axial et n'interfère pas avec l'action de centrage des dents de l'accouplement curvique 21.

D'autres éléments du moteur à turbine à gaz, tels que des roues de compresseur (non représentés), peuvent être assemblés de la même manière.

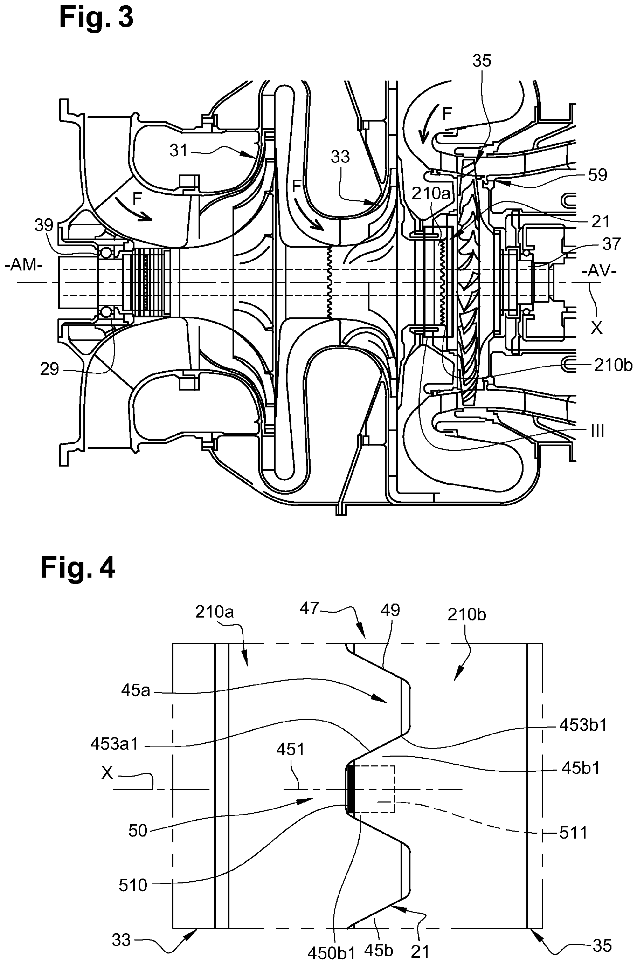

Sur la figure 3, le montage, relativement proche du précédent et toujours relatif à une turbomachine à gaz pour aéronef, s'il ne montre pas de tirant, illustre un arbre 29 tubulaire traversant un ensemble tournant comprenant, successivement, axialement et d'amont (AM) vers l'aval (AV), des rotors (roues) de compresseur basse pression 31, de compresseur haute pression 33 et de turbine haute pression (THP) 35. L'arbre 29 creux est fileté à au moins une extrémité pour être engagé axialement avec l'écrou 37 de tirant axial. A l'opposé axial (à gauche figure 3), un épaulement 39 ou autre prend appui sur le rotor 31. L'accouplement curvique 21 engagé et comprimé par le tirant lorsque l'écrou est mis au couple, assure l'alignement suivant l'axe X de l'arbre 29, étant précisé que, dans le présent exemple de turbomachine, dit à arbre traversant, un autre arbre (non représenté) lié au rotor de la turbine basse pression (non représentée) qui suit axialement le rotor de la turbine haute pression 35, traverse axialement l'arbre 29 qui relie donc fonctionnellement le rotor du compresseur 33 et le rotor de la turbine 35.

Comme on l'a compris c'est une rupture d'un tirant comme précité, ou le desserrage excessif de l'écrou de ce tirant, tel l'écrou 26 figure 2, qui est l'évènement redouté en l'espèce et dont l'invention vise à contrecarrer les conséquences fréquentes, du fait d'un risque important de mise en survitesse.

En effet, par exemple en liaison avec un montage comme figure 3, si un désengagement axial (voir flèches 41 figure 5) entre les moitiés de couplage 210a,210b d'un accouplement curvique 21 devient effectif, le rotor de la turbine haute pression 35 n'est plus soumise au couple résistant du rotor du compresseur 33 et continue à être alimenté par le flux aérodynamique F qui y circule, ce qui peut conduire à une situation potentielle de survitesse difficilement quantifiable du rotor de la turbine haute pression 35.

L'invention vise à la mise en place d'un dispositif 50 assurant une séquence systématique permettant, par exemple en liaison avec un montage comme figure 3 (mais tout accouplement curvique est concerné, tels ceux 21 des figures 1,2), que dans l'exemple, le rotor de la turbine 35 haute pression reste en contact avec des parties statiques (ci-après l'une des dents, 45b1, de la moitié 210a de couplage côté rotor du compresseur 33 haute pression), à la suite d'une rupture de tirant, et ce de façon déterministe.

En associant la figure 3 et ses agrandissements locaux de l'accouplement curvique 21 des figures 4 et 5, on voit ainsi un mécanisme 47 de couplage denté pour un assemblage d'éléments rotatifs (dans l'exemple rotors de compresseur 33 et de turbine 35) de turbomachine, ce mécanisme comprenant :
- outre une paire de moitiés de couplage 210a, 210b ayant une interface 49 de palier (ou un couplage denté axial) entre elles (en situation couplée ; figure 4),
- une excroissance 51 par laquelle on va donc pouvoir maîtriser les conséquences d'un désaccouplement intervenant sur le mécanisme de couplage, suite à une rupture de tirant.

Sur les figures où elle apparait, l'excroissance 51 est marquée en noir, pour qu'on la visualise bien, en particulier son contour extérieur visible.

Il est précisé que chacune desdites moitiés de couplage comprend, comme déjà noté, une pluralité de dents cannelées 45a,45b concentriques inter-engagées autour de l'axe X, pour transmettre un couple entre elles, lorsque le tirant est en état,

L'excroissance 51 est présente, à l'écart de l'axe X - donc de façon désaxée - sur l'une desdites dents cannelées (telle 45b1) de l'une des moitiés de couplage : dans l'exemple préféré et comme montré figures 4 et 5, la dent 45b1 de la moitié 210b de couplage côté rotor de turbine 35.

On aura compris que c'est avec cette excroissance 51 que la dent cannelée (45a1 dans l'exemple) de l'autre moitié de couplage (210a dans l'exemple) vient en contact dans une situation de désaccouplement desdites moitiés de couplage ; voir figure 5.

Bien qu'un autre emplacement sur la dent concernée soit envisageable, il est conseillé que :
- chaque dent cannelée présentant axialement une extrémité libre (ou distale), telle l'extrémité libre 450b1 de la dent 45b1 (figure 4),
- l'excroissance 51 soit présente sur (à) cette extrémité libre 450b1.

Ainsi l'excroissance 51 pourra être centrée sur l'axe d'élévation de la dent en cause - axe 451, parallèle à l'axe X, de la dent 45b1 dans l'exemple (figures 4,6) - et donc se dresser à l'écart de l'interface où les parois latérales en pente de deux dents adjacentes, respectivement de l'une et l'autre des moitiés de couplage 210a,210b, sont en prise mutuelles, en situation (nominale) d'accouplement; voir les parois latérales 453a1,453b1 desdites dents (circonférentiellement) adjacentes 45a1, 45b1 respectives ; cf. figures 4,5.

En alternative, on aurait pu imaginer, sur ces parois latérales, un couple de creux et de bosse (ou excroissance) inter-engagés, en situation d'accouplement, et décalés parallèlement à l'axe X et circonférentiellement, en cas de désaccouplement axial.

Au moins en présence d'une excroissance 51 située en extrémité libre de dent, telle 450b1, cette excroissance peut se présenter :
- comme un pion 510 fixé à la dent cannelée concernée, telle 45b1 ; cf. figure 4,
- ou comme monobloc avec la dent cannelée, qu'elle prolonge alors par rapport aux autres dents cannelées de sa moitié de couplage ; cf. figure 5.

L'extrémité libre ou distale 451 s'étend ici dans un plan transversal à l'axe X ; ceci s'appliquant d'ailleurs à toutes les dents d'une même moitié de couplage 210a,210b, qui s'étendent toutes dans un même tel plan.

La fixation pourra se faire par engagement partiel, serré, du pion 510 dans un trou 511. En présence d'un tel trou parallèle à l'axe X de la dent porteuse, le pion 510 sera situé à ladite extrémité libre de cette dent.

Pour éviter, alors que la turbomachine fonctionne normalement, des frottements inappropriés à l'endroit des parois latérales 453a1,453b1 du couplage, et favoriser un appui angulaire une fois le désaccouplement initié, il est proposé, comme illustré figures 4,5, que l'excroissance 51 fasse saillie sur l'extrémité libre 450b1 de la dent cannelée 45b1 considérée, à l'endroit d'un épaulement 53 qui entoure cette excroissance 51.

Si l'excroissance 51 présente un périmètre entièrement entouré par l'épaulement 53, on fiabilisera encore davantage la maîtrise du désaccouplement, sans privilégier un angle d'approche de la dent adjacente (telle donc 45a1) vis-à-vis de celle porteuse de l'excroissance 51.

Comme déjà mentionné, avec une seule excroissance 51 présente sur l'une seulement et l'une quelconque desdites dents cannelées, on sera sûr de ne créer un basculement qu'autour d'une seule zone (celle de l'excroissance 51) et on favorisera le tierçage.

Il n'y aura alors, autour de l'axe X, aucune position angulaire préférentielle de positionnement de l'excroissance 51.

Comme on l'a compris, l'invention propose donc une solution pour chercher à maîtriser les conséquences d'un désaccouplement sur un mécanisme de couplage denté axial d'un assemblage d'éléments rotatifs de turbomachine à gaz pour aéronef, ce désaccouplement se manifestant en l'espèce par l'écartement axial relatif (voir figure 4 puis figure 5) entre les deux moitiés de couplage précitées 210a,210b.

En pratique, ce qui va se produire en situation de début d'un tel désaccouplement axial, est que, l'excroissance 51 considérée étant positionnée sur l'une desdites dents cannelées à l'écart de l'axe X, un pivotement relatif entre lesdites moitiés de couplage 210a,210b va s'opérer, autour de l'excroissance, comme montré par les flèches 55 (initiation du pivotement/basculement à l'endroit d'une excroissance 51) et 57 (désaxement des deux moitiés de couplage l'une par rapport à l'autre ; axes respectifs 451 et X) ; figure 6. L'axe X du rotor de la turbine haute pression 35 est devenu X1.

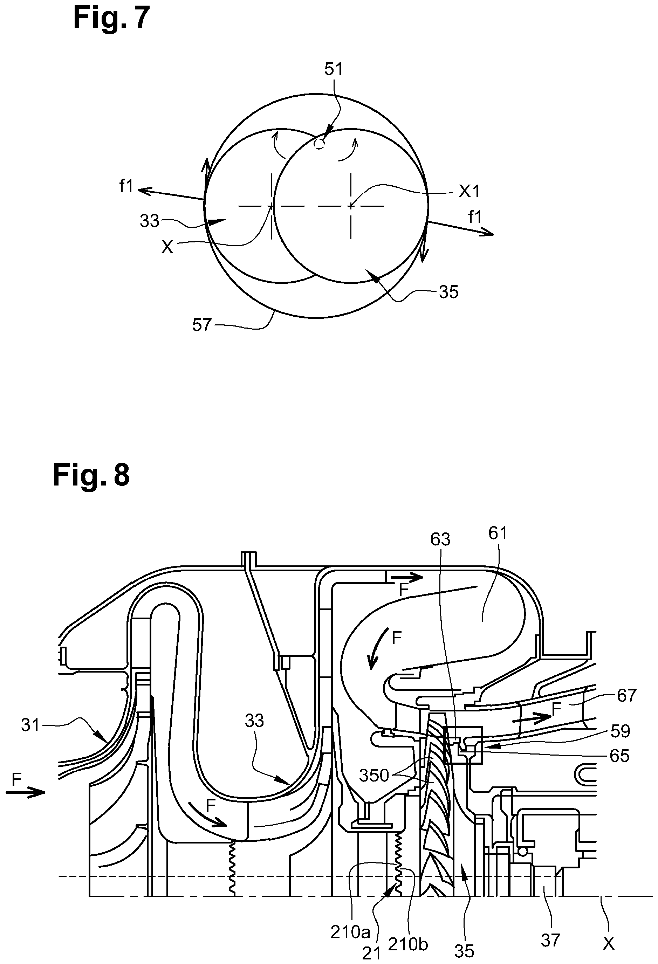

Dans l'exemple de réalisation retenu, un frottement va alors intervenir entre le rotor de la turbine haute pression 35 et le joint labyrinthe 59 - son enveloppe 57 (figures 3 et 7) - à proximité immédiate duquel tourne (autour donc de l'axe X) en situation normale de fonctionnement le rotor de la turbine haute pression 35.

Il est précisé que ce joint labyrinthe 59, qui comprend deux lèvres 63,65 l'une axiale, l'autre radiale, dessine une chicane en limite radialement intérieure de la veine 67 dans laquelle le flux F de gaz de combustion a été dirigé en sortie ici d'une chambre de combustion 61.

En effet, dans le montage retenu, après avoir été comprimé par les compresseurs basse pression puis haute pression, via les rotors respectifs 31,33, un flux F d'air a été apporté à la chambre de combustion 61 (figure 8) où une combustion a eu lieu en présence de carburant (via des injecteurs de de carburant non représentés), après quoi les gaz de combustion qui forment alors le flux F sont arrivés sur les aubes périphériques du rotor de la turbine haute pression 35.

Si à un moment donné, le désaccouplement précité s'est produit, le rotor de la turbine haute pression 35 et l'enveloppe 57 du joint labyrinthe 59 sont donc entrés en contact, suite au basculement créé via l'excroissance 51.

Ce contact, générateur de frottements (f1 figure 7), a eu pour effet de créer un couple antagoniste à celui d'entraînement du rotor du compresseur 33 et donc d'induire une maîtrise des conséquences du désaccouplement, en tendant à éviter une situation de prise de survitesse de la part du rotor de la turbine haute pression 35.

Le rotor de la turbine haute pression 35 doit tendre à ralentir.

Un tel comportement imposé à un mobile en mouvement doit permettre de :
- conserver l'engagement des pièces (ici moitiés de couplage 210a,210b) jusqu'au blocage du mobile (ici le rotor de la turbine haute pression 35),
- s'affranchir du lien entre contrainte d'engagement au niveau du curvique 21 et jeux axiaux, cette contrainte devenant prépondérante avec la taille (longueur) des turbomachines à gaz double flux, pour aéronef, modernes,
- définir une méthode numérique de simulation du comportement du mobile considéré. Les paramètres à déterminer pour garantir le contact radial précité de frottement au niveau de l'enveloppe 57, avant le désengagement/ désaccouplement sont :
- l'inertie et masse des composants tournants (rotors précités),
- la poussée axiale appliquée sur ces composants,
- la vitesse de rotation du mobile constitué par les composants,
- le jeu radial entre le joint labyrinthe 59 du rotor de la turbine haute pression 35 et l'enveloppe statique,
- la saillie formée par l'excroissance 51 sur sa dent cannelée.

## Revendications

1. Mécanisme de couplage denté pour un assemblage d'éléments rotatifs (13-18 ; 25 ; 33 ; 35) d'une turbomachine à gaz pour aéronef, ledit mécanisme (47) comprenant une paire de moitiés de couplage (210a,210b) ayant une interface de couplage denté axial entre elles, chacune desdites moitiés de couplage présentant ainsi une pluralité de dents cannelées inter-engagées autour d'un axe (X), pour transmettre un couple entre elles, **caractérisé en ce qu'**il comprend en outre une excroissance (51) :
- présente, à l'écart dudit axe (X), sur l'une desdites dents cannelées (45b1) de l'une desdites moitiés de couplage (210b), et
- avec laquelle une dite dent cannelée (45a1) de l'autre moitié de couplage (210a) vient en contact dans une situation de désaccouplement desdites moitiés de couplage.

2. Mécanisme selon la revendication 1, dans lequel :
- chaque dent cannelée présente axialement une extrémité libre (450b1), et
- l'excroissance (51) est présente sur l'extrémité libre de l'une desdites dents cannelées (45b1).

3. Mécanisme selon l'une quelconque des revendications précédentes, dans lequel l'excroissance (51) se présente comme un pion (510) fixé à la dent cannelée.

4. Mécanisme selon la revendication 1 ou 2, dans lequel l'excroissance (51) est monobloc avec la dent cannelée.

5. Mécanisme selon la revendication 2, seule ou en combinaison avec l'une quelconque des revendications 3 ou 4, dans lequel ladite excroissance (51) fait saillie sur l'extrémité libre de la dent cannelée à l'endroit d'un épaulement (53) qui l'entoure.

6. Mécanisme selon la revendication 5, dans lequel l'excroissance présente un périmètre entièrement entouré par l'épaulement (53).

7. Mécanisme selon l'une quelconque des revendications précédentes, dans lequel ladite excroissance (51) est présente sur l'une seulement et l'une quelconque desdites dents cannelées (45b1).

8. Turbomachine à gaz pour aéronef pourvue du mécanisme (47) selon l'une quelconque des revendications précédentes.

9. Procédé pour maîtriser les conséquences d'un désaccouplement sur un mécanisme (47) de couplage denté axial d'un assemblage d'éléments rotatifs (13-18 ; 25 ; 33 ; 35) de turbomachine à gaz pour aéronef, ledit mécanisme comprenant une paire de moitiés de couplage (210a,20b) ayant une interface de couplage denté axial entre elles, chacune desdites moitiés de couplage présentant ainsi une pluralité de dents cannelées inter-engagées autour d'un axe, pour transmettre un couple entre elles, **caractérisé en ce qu'**en situation de début de désaccouplement axial et par l'intermédiaire d'une excroissance (51) positionnée sur l'une desdites dents cannelées (45b1) à l'écart dudit axe (X), on provoque un pivotement relatif entre lesdites moitiés de couplage, autour de ladite excroissance.

## Patentansprüche

1. Zahnkopplungsmechanismus für eine Anordnung von rotierenden Elementen (13-18; 25; 33; 35) eines Gasturbotriebwerks für Luftfahrzeuge, wobei der Mechanismus (47) ein Paar Kopplungshälften (210a, 210b) mit einer axialen Zahnkopplungsschnittstelle zwischen ihnen umfasst, wobei somit jede der Kopplungshälften eine Vielzahl von Keilzähnen aufweist, die um eine Achse (X) ineinander greifen, um ein Drehmoment zwischen ihnen zu übertragen,
**dadurch gekennzeichnet, dass** er ferner eine Ausstülpung (51) umfasst,
- die beabstandet von der Achse (X) an einem der Keilzähne (45b1) einer der Kopplungshälften (210b) vorhanden ist und
- mit der ein Keilzahn (45a1) der anderen Kopplungshälfte (210a) in einer entkuppelten Stellung der Kopplungshälften in Kontakt gelangt.

2. Mechanismus nach Anspruch 1, wobei
- jeder Keilzahn axial ein freies Ende (450b1) aufweist und
- die Ausstülpung (51) am freien Ende eines der Keilzähne (45b1) vorhanden ist.

3. Mechanismus nach einem der vorhergehenden Ansprüche,
wobei die Ausstülpung (51) als Zapfen (510) vorliegt, der an dem Keilzahn befestigt ist.

4. Mechanismus nach Anspruch 1 oder 2,
wobei die Ausstülpung (51) einstückig mit dem Keilzahn ausgebildet ist.

5. Mechanismus nach Anspruch 2 für sich genommen oder in Kombination mit einem der Ansprüche 3 oder 4,
wobei die Ausstülpung (51) am freien Ende des Keilzahns an der Stelle einer sie umgebenden Schulter (53) vorspringt.

6. Mechanismus nach Anspruch 5,
wobei die Ausstülpung einen Umfang aufweist, der vollständig von der Schulter (53) umgeben ist.

7. Mechanismus nach einem der vorhergehenden Ansprüche,
wobei die Ausstülpung (51) nur an einem, beliebigen der Keilzähne (45b1) vorhanden ist.

8. Gasturbotriebwerk für Luftfahrzeuge mit dem Mechanismus (47) nach einem der vorhergehenden Ansprüche.

9. Verfahren zum Beherrschen der Auswirkungen einer Entkopplung an einem axialen Zahnkopplungsmechanismus (47) einer Anordnung von rotierenden Elementen (13-18; 25; 33; 35) eines Gasturbotriebwerks für Luftfahrzeuge, wobei der Mechanismus ein Paar Kopplungshälften (210a, 20b) mit einer axialen Zahnkopplungsschnittstelle zwischen ihnen umfasst, wobei somit jede der Kopplungshälften eine Vielzahl von Keilzähnen aufweist, die um eine Achse ineinander greifen, um ein Drehmoment zwischen ihnen zu übertragen,
**dadurch gekennzeichnet, dass** in einer Anfangsstellung der axialen Entkopplung und mittels einer Ausstülpung (51), die an einem der Keilzähne (45b1) von der Achse (X) beabstandet positioniert ist, eine relative Verschwenkung zwischen den Kopplungshälften um die Ausstülpung herum bewirkt wird.

## Claims

1. A toothed coupling mechanism for an assembly of rotating elements (13-18; 25; 33; 35) of an aircraft gas turbine engine, said mechanism (47) comprising_a pair of coupling halves (210a, 210b) having an axial toothed coupling interface therebetween, each of said coupling halves thereby having a plurality of splined teeth inter-engaged about an axis (X), for transmitting torque therebetween, **characterized in that** it further comprises a protrusion (51) :
- located, away from said axis (X), on one of said splined teeth (45b1) of one of said coupling halves (210b), and
- with which one said splined tooth (45a1) of the other coupling half (210a) comes into contact in a situation of uncoupling of said coupling halves.

2. Mechanism according to claim 1, in which:
- each splined tooth has an axial free end (450b1), and
- the protrusion (51) is located on the free end of one of said splined teeth (45b1).

3. Mechanism according to any one of the preceding claims, wherein the protrusion (51) is in the form of a pin (510) secured to the splined tooth.

4. Mechanism according to claim 1 or 2, wherein the protrusion (51) is integral with the splined tooth.

5. Mechanism according to claim 2, alone or in combination with any of claims 3 or 4, wherein said protrusion (51) projects from the free end of the splined tooth at a surrounding shoulder (53).

6. Mechanism according to claim 5, wherein the protrusion has a perimeter entirely surrounded by the shoulder (53).

7. Mechanism according to any one of the preceding claims, wherein said protrusion (51) is located on only one but any one of said splined teeth (45b1).

8. An aircraft gas turbomachine provided with the mechanism (47) according to any one of the preceding claims.

9. A method for controlling consequences of an uncoupling on an axial toothed coupling mechanism (47) of an assembly of rotating elements (13-18; 25; 33; 35) of an aircraft gas turbine engine, said mechanism comprising a pair of coupling halves (210a,20b) having an axial toothed coupling interface therebetween, each of said coupling halves thereby having a plurality of splined teeth inter-engaged about an axis to transmit torque therebetween, **characterized in that**, in an incipiently axially uncoupling condition and by means of a protrusion (51) located on one of said splined teeth (45b1) away from said axis (X), a relative pivoting between said coupling halves about said protrusion is caused.
